# EUROPÄISCHE PATENTANMELDUNG

(11) **EP 4 585 527 A1**
(43) Veröffentlichungstag der Anmeldung: **16.07.2025**
(21) Anmeldenummer: 24220475.8
(22) Anmeldetag: 17.12.2024
(51) Int. Cl.: B65B 11/04, A22C 7/00, B65B 25/06, B65B 63/02

(54) **BEARBEITEN, INSBESONDERE VERPACKEN VON SPIESSGÜTERN**

(30) Priorität: 20.12.2023 DE 102023136046
(71) Anmelder: Baharli, Oguz, 89150 Laichingen (DE)
(72) Erfinder: Baharli, Oguz, 89150 Laichingen (DE)
(74) Vertreter: Raunecker, Klaus Peter

(57) **Zusammenfassung**

Die vorliegende Offenbarung betrifft ein System zum Bearbeiten, insbesondere zum Verpacken von Gütern umfassend: eine erste Einheit umfassend: ein Spieß zum Anbringen eines Spießguts an dem Spieß; eine zweite Einheit umfassend: Mittel zum Zusammendrücken von Spießgut des Spießes während ein Verpacken des Spießguts erfolgt.

## Beschreibung

### 1. Technisches Gebiet

Die Erfindung betrifft ein System, eine Vorrichtung und ein Verfahren zum Bearbeiten, insbesondere zum Verpacken von Gütern, insbesondere zum Verpacken von Spießgütern an einem Spieß.

### 2. Stand der Technik

In der Verpackungstechnik werden üblicherweise hohe Anforderungen gestellt, um eine geeignete Verpackung von Verpackungsgütern zu erreichen. Beispielsweise wird für viele industrielle Randbedingungen eine zuverlässige und sichere Verpackung von Verpackungsgütern gefordert. Üblicherweise kann einer Verpackung eine Schutzfunktion der Verpackungsgüter zugesprochen werden. So kann eine Verpackung beispielsweise zu einem chemischen, mechanischen und/oder thermischen Schutz der Verpackungsgüter dienen. Ebenso kann eine Verpackung auch nötig sein, um die Verpackungsgüter transportfähig zu machen und/oder eine sinnvolle Lagerung der Verpackungsgüter zu ermöglichen.

Üblicherweise ist es gewünscht, zum einen die Funktionalität der Verpackung zuverlässig gewährleisten zu können, und zum anderen den Verpackungsvorgang der Verpackungsgüter möglichst effizient zu gestalten.

Besondere technische Randbedingungen hinsichtlich der Verpackung und des Verpackungsvorganges ergeben sich bei Spießgütern, die an einem Spieß angebracht sind. Üblicherweise ist bei Spießgütern an einem Spieß zumindest ein Teil der Spießgüter an dem Spieß aufgespießt bzw. um den Spieß herum angebracht. Somit erfüllt der Spieß meist eine zentrale Fixierfunktion für die Spießgüter des Spießes, sodass sich besondere Herausforderungen bei der Verpackung von Spießgütern ergeben.

Die Europäische Patentanmeldung EP 2 183 974 A1 offenbart eine Vorrichtung zur Verpackung eines Spießes mit einseitig auf den Spieß aufgestecktem Spießgut. Die Vorrichtung hat einen Wickeltisch, der ein Drehelement mit zumindest einem Aufnahmeelement zur kippfreien Aufnahme des Spießes aufweist. Das Drehelement ist mit einem Drehantrieb versehen. Der Spieß wird laut der genannten Schrift in vorteilhafter Weise mit nach oben freibleibender Spießspitze auf dem Wickeltisch angeordnet, wobei die Anordnung kippfrei an den Aufnahmeelementen festgelegt ist. Somit ist der Spieß bis zur Spießspitze vollständig frei umwickelbar.

Bekannte Ansätze zum Bearbeiten, insbesondere zum Verpacken von Spießgütern an einem Spieß sind jedoch nicht immer optimal.

Aufgabe der vorliegenden Erfindung ist es, eine zumindest teilweise Verbesserung bei der Bearbeitung, insbesondere der Verpackung von Spießgütern zu ermöglichen, oder eine alternative Bearbeitungs- bzw. Verpackungstechnik von Spießgütern zu erreichen.

Diese Aufgabe wird durch die hierin beschriebenen Aspekte adressiert.

### 3. Zusammenfassung der Erfindung

Ein erster Aspekt betrifft ein System zum Bearbeiten eines Spießguts umfassend: eine erste Einheit umfassend: einen Spieß zum Anbringen des Spießguts an dem Spieß; eine zweite Einheit umfassend: Mittel zum Zusammendrücken des Spießguts des Spießes, während ein Bearbeiten des Spießguts erfolgt.

Ein Ansatz des ersten Aspekts ist es also, dass während des Bearbeitens des Spießguts zusätzlich über das Mittel zum Zusammendrücken auch ein aktives Zusammendrücken (z.B. ein Komprimieren) des Spießguts erfolgt. Dies kann so verstanden werden, dass neben dem Bearbeiten des Spießguts ein separater Kräftevorgang über das Mittel zum Zusammendrücken stattfindet. Erfolgt also ein Bearbeitungsvorgang des Spießguts, können mit dem Mittel zum Zusammendrücken als eine separate Instanz Kräfte auf das Spießgut eingebracht werden. Beispielsweise kann das Mittel zum Zusammendrücken ein automatisches Zusammendrücken von Spießgut während des Bearbeitens des Spießguts verursachen. Das Mittel zum Zusammendrücken kann z.B. eine Kompressionseinheit mit einem oder mehreren Elementen umfassen, um das Zusammendrücken des Spießguts zu bewirken.

Ein Spieß kann z.B. eine Geometrie aufweisen, welche geeignet ist, ein Spießgut oder mehrere Spießgüter an dem Spieß aufzuspießen und/oder anzubringen. Die Geometrie des Spießes kann z.B. so gestaltet sein, dass man den Spieß durch ein Spießgut führen kann, sodass ein Durchstechen des Spießguts erfolgt. Durch die sich so bildende Grenzfläche zwischen Spieß und Spießgut (an der Durchstechungsstelle) kann ermöglicht werden, dass das Spießgut an dem Spieß befestigt ist. Die Geometrie des Spießes kann z.B. auch so gestaltet sein kann, dass Spießgut um den Spieß herum angebracht werden kann, wobei nicht zwangsweise ein Durchstechen des Spießguts erfolgen muss. Das Spießgut kann z.B. eine derartige Konsistenz aufweisen, dass das Spießgut an der Geometrie des Spießes anhaften kann, sodass nicht zwangsweise ein Durchstechen des Spießguts erfolgen muss. Beispielsweise kann dies bei einer bestimmten Viskosität von Spießgütern möglich sein (z.B. bei zähflüssigen, teigartigen und/oder hackfleischartigen Spießgütern). In einem Beispiel kann die Geometrie des Spießguts derart gestaltet sein, dass zumindest ein Teil der Spießgüter an dem Spieß aufgespießt ist (z.B. über ein Durchstechen dieser Spießgüter), wobei ein anderer Teil der Spießgüter anderweitig an dem Spieß angebracht ist. Beispielsweise kann der andere Teil der Spießgüter zwischen den aufgespießten Spießgütern angebracht sein, sodass der andere Teil über die aufgespießten Spießgüter am Spieß fixiert ist. Beispielsweise kann der andere Teil der Spießgüter auch über eine Haftung an dem Spieß angebracht sein (wie hierin beschrieben).

Beispielsweise kann der Spieß so gestaltet sein, dass Lebensmittel als Spießgut an dem Spieß angebracht werden können.

In einem Beispiel kann der Spieß eine längliche Geometrie aufweisen. Hierbei kann der Spieß entlang einer ersten Richtung eine längere Erstreckung aufweisen, als entlang einer zweiten Richtung des Spießes, die senkrecht zu der ersten Richtung ist. In so einem Fall können die Spießgüter z.B. um die erste Richtung herum angeordnet werden. Beispielsweise kann die Achse entlang der ersten Richtung als Spießachse bezeichnet werden, da die Spießgüter entlang der Spießachse aufgespießt und/oder um die Spießachse herum angebracht werden können.

In einem Beispiel kann die längliche Geometrie des Spießes in einer beliebigen Form ausgestaltet sein. So kann die längliche Geometrie eine zylindrische Form aufweisen. Die längliche Geometrie kann beispielsweise aber auch eine rechteckige Form aufweisen.

In einem Beispiel kann der Spieß zumindest teilweise hohlförmig sein (z.B. in der Art eines hohlförmigen Zylinders bzw. eines Rohrs). Ebenso ist jedoch auch ein anderes Beispiel des Spießes möglich, in dem der Spieß aus einem durchgehenden Materialblock geschaffen ist (z.B. einem zylinderförmigen Stab oder einem länglichen Rechteck).

Das Bearbeiten des Spießguts kann einen beliebigen Bearbeitungsvorgang umfassen. Der Bearbeitungsvorgang kann z.B. eine Bearbeitung der Oberfläche des Spießguts umfassen. Der Bearbeitungsvorgang kann z.B. auch eine seitliche Bearbeitung des Spießguts umfassen, bei der im Wesentlichen auf eine zugängliche Seite des Spießguts eingewirkt wird.

Bei dem Bearbeiten des Spießguts kann es z.B. dazu kommen, dass ungewünschte Kräfte entlang der Spießachse eingebracht werden. Diese können z.B. eine ungewünschte Volumensexpansion des

Spießguts entlang der Spießachse bewirken. Die ungewünschten Kräfte können z.B. auch einen Qualitätsmangel des Spießguts verursachen oder weitergehende Nachbearbeitungen nötig machen. Über das Mittel zum Zusammendrücken des Spießguts während des Bearbeitens kann den ungewünschten Kräften entlang der Spießachse zumindest teilweise entgegengewirkt werden. Somit kann eine verbesserte Bearbeitung des Spießguts ermöglicht werden.

In einem Beispiel kann das Mittel zum Zusammendrücken konfiguriert sein, das Spießgut (im Wesentlichen) entlang der Spießachse zusammenzudrücken. Mit diesem Ansatz können also eine Kraft auf das Spießgut zumindest entlang der Spießachse eingebracht werden. In einem Beispiel kann mit diesem Ansatz auch eine Kraft im Wesentlichen entlang der Spießachse eingebracht (wobei in diesem Fall im Wesentlichen keine Kraft senkrecht zur Spießachse eingebracht wird).

Über das Zusammendrücken des Spießguts entlang der Spießachse, kann die unerwünschte Volumensexpansion des Spießguts entlang der Spießachse technisch adressiert werden. Beispielsweise kann über das Zusammendrücken des Spießguts entlang der Spießachse das Spießgut entlang der Spießachse komprimiert werden. Beispielsweise kann mit diesem Ansatz auch (lediglich) einer Volumenexpansion entlang der Spießachse entgegengewirkt werden, da dieser Volumenexpansion eine Kraft entlang der Spießachse entgegengestellt wird.

In einem Beispiel kann das Bearbeiten ein Verpacken des Spießguts umfassen. Das Verpacken des Spießguts kann z.B. über eine Folie stattfinden.

Bei einem bekannten Ansatz (z.B. wie in EP 2 183 974 A1 offenbart) erfolgt lediglich ein Verpacken von Spießgut ohne ein separates Zusammendrücken des Spießguts während des Verpackens.

Der Erfinder der vorliegenden Offenbarung hat erkannt, dass dies nicht immer vorteilhaft ist. Denn bei dem bekannten Ansatz kann das Spießgut im Endresultat vergleichsweise lose vorliegen, also ohne eine separate Kompression der Spießgüter. Diese Situation ist z. B. nicht immer vorteilhaft für die Lagerung. So kann sich beispielsweise aufgrund der vergleichsweise losen Anordnung der Spießgüter Feuchtigkeit an den Spießgütern ansammeln, was nicht gewünscht ist. Ebenso kann ohne separate Kompression der Spießgüter während des Verpackens die ursprüngliche Anordnung der Spießgüter an dem Spieß ungewollt verzerrt werden. So kann z.B. die Form und/oder das Volumen der Spießgüter mit dem bekannten Ansatz nach dem Verpackungsvorgang eine ungewünschte Form annehmen, die ursprünglich bei Anbringung der Spießgüter an dem Spieß gar nicht erwünscht war. Die Verzerrung kann z.B. auch bei der Lagerung des verpackten Spießguts nachteilig sein.

Der Erfinder der vorliegenden Anmeldung hat diese Problematiken erkannt. Mit dem hierin beschriebenen Ansatz werden diese Probleme zumindest teilweise adressiert.

Denn mit dem Zusammendrücken von Spießgut während des Verpackens des Spießguts kann zum einen eine höhere Gesamtkompression von Spießgut des Spießes erfolgen. Beispielsweise kann insbesondere eine ungewollte Expansion des Spießgutes entlang der Spießachse vermieden werden, wenn ein Zusammendrücken des Spießguts entlang der Spießachse während des Verpackens erfolgt.

Mit dem hierin beschriebenen Ansatz kann also das Spießgut nach dem Verpacken fester komprimiert vorliegen als ohne ein Zusammendrücken des Spießguts während des Verpackens. Somit kann das Spießgut nach dem Verpackungsvorgang im Vergleich weniger lose in der Verpackung vorliegen. Dies kann z.B. Feuchtigkeitsansammlungen im Spießgut zumindest teilweise entgegenwirken. Ebenso können gewünschte mechanische Eigenschaften des Spießguts ermöglicht werden. Beispielsweise kann es für eine geeignete Zubereitung des Spießguts vorteilhaft sein, wenn dieses möglichst komprimiert in der Verpackung gelagert wird.

Ferner kann mit dem hierin beschriebenen Ansatz einer ungewünschten Verzerrung der Spießgüter nach dem Verpackungsvorgang entgegengewirkt werden, da ein aktives Zusammendrücken der Spießgüter während des Verpackens stattfindet.

In einem Beispiel kann die zweite Einheit eine Übertragungseinheit umfassen, welche konfiguriert ist, Spießgut an dem Spieß rotieren zu lassen, insbesondere während des Bearbeitens des Spießguts (z.B. während des Verpackens des Spießguts). Das Rotieren des Spießguts kann z.B. für das Verpacken notwendig sein. Die Übertragungseinheit kann z.B. ein oder mehrere Komponenten umfassen, die bewirken, dass sich das Spießgut rotiert. In einem Beispiel kann z.B. mit der Übertragungseinheit ermöglicht werden, dass das Spießgut zusammen mit dem Spieß rotiert (z.B. um die Spießachse herum). So kann beispielsweise das Spießgut in seiner Gesamtheit fest am Spieß angebracht sein, sodass eine Rotation des Spießguts auch eine Rotation des Spießes nach sich zieht. Ebenso kann das Spießgut in seiner Gesamtheit fest am Spieß angebracht sein, sodass eine Rotation des Spießes auch eine Rotation des Spießguts nach sich zieht. Ferner ist auch denkbar, dass das Spießgut um den Spieß herum rotiert werden kann, wobei der Spieß im Wesentlichen ortsfest fixiert bleibt (z.B. falls das Spießgut lose am Spieß befestigt ist und somit leicht um den Spieß herum rotieren kann bei Fixierung des Spießes).

In einem Beispiel kann die Übertragungseinheit ein Rotationselement und einen Rotationsantrieb umfassen; wobei das Rotationselement durch den Rotationsantrieb um eine Rotationsachse rotierbar ist, wobei das Rotationselement mit dem Spießgut und/oder dem Spieß gekoppelt werden kann, sodass eine Rotation des Rotationselements in eine Rotation des Spießguts an dem Spieß übertragen wird, insbesondere während des Bearbeitens des Spießguts (z.B. während des Verpackens des Spießguts).

In einem Beispiel kann der Rotationsantrieb einen Motor und eine Welle aufweisen, sodass eine Rotationsbewegung bereitgestellt werden kann. Das Rotationselement kann z.B. über ein oder mehrere Komponenten die Rotationsbewegung abgreifen, sodass das Rotationselement um seine Rotationsachse rotiert.

In einem Beispiel kann also das Rotationselement mit dem Spießgut gekoppelt werden, sodass eine Rotation des Rotationselements in eine Rotation des Spießguts an dem Spieß übertragen wird. Dies kann so verstanden werden, dass in diesem Fall die Rotationsbewegung des Rotationselements direkt auf das Spießgut übertragen wird, sodass das Spießgut im Wesentlichen wie das Rotationselement zu rotieren beginnt. Die Übertragung der Rotationsbewegung erfolgt also durch das Wechselspiel zwischen Rotationselement und Spießgut. Durch die Rotationsbewegung des Spießguts erfolgt dann auch die Rotation des Spießes über eine Kräfteübertragung, sodass letztlich Spießgut und Spieß um die Spießachse rotieren. Dies ist z.B. dann möglich, wenn das Spießgut fest an dem Spieß angebracht ist (wie hierin beschrieben).

In einem anderen Beispiel kann das Rotationselement mit dem Spieß gekoppelt werden, sodass eine Rotation des Rotationselements in eine Rotation des Spießes und somit in eine Rotation des Spießguts übertragen wird. Dies kann so verstanden werden, dass in diesem Fall die Rotationsbewegung des Rotationselements direkt auf das Spieß übertragen wird, sodass das Spieß im Wesentlichen wie das Rotationselement zu rotieren beginnt. Die Übertragung der Rotationsbewegung erfolgt also durch das Wechselspiel zwischen Rotationselement und Spieß. Hierzu kann ein Verbindungsverschluss zwischen Rotationselement und Spieß im System vorgesehen sein. Durch die Rotationsbewegung des Spießes erfolgt dann auch die Rotation des Spießguts über eine Kräfteübertragung, sodass letztlich Spießgut und Spieß um die Spießachse rotieren.

In einem Beispiel kann die erste Einheit mit dem Spieß so positioniert sein, dass die Spießachse im Wesentlichen mit der Rotationsachse des Rotationselements zusammenfällt. Hierzu kann beispielsweise eine Markierung im System vorgesehen sein, sodass die erste Einheit mit dem Spieß entsprechend positionierbar ist.

In einem Beispiel kann das Rotationselement dazu eingerichtet sein, mit dem Spießgut an dem Spieß in Verbindung zu stehen, insbesondere während des Bearbeitens des Spießguts (z.B. während des Verpackens des Spießguts). In diesem Beispiel kann die Verbindung ein Kontakt zwischen Rotationselement und Spießgut sein, sodass eine Fläche des Rotationselements eine Fläche des Spießguts berührt. In einem Beispiel kann auch ein oder mehrere Verpackungsschichten auf dem Spießgut vorhanden sein, wobei die Verbindung in diesem Fall zwischen Rotationselement und verpackten Spießgut erfolgt. So oder so, kann diese Verbindung die Kopplung zwischen Rotationselement und Spießgut darstellen, sodass eine Rotation des Rotationselements in eine Rotation des Spießguts an dem Spieß übertragen werden kann (wie hierin beschrieben).

In einem Beispiel kann das Mittel zum Zusammendrücken konfiguriert sein, eine Kraft auf das Rotationselement auszuüben. Die Kraft kann dazu herangezogen werden, das Zusammendrücken des Spießguts während des Verpackens zu vollziehen. In diesem Beispiel kann also das Zusammendrücken des Spießguts über das Rotationselement erfolgen. Das Rotationselement kann also auch als ein Teil des Mittels zum Zusammendrücken verstanden werden. Das Zusammendrücken über das Rotationselement hat sich als vorteilhaft herausgestellt. Denn somit können über eine Wirkkomponente, dem Rotationselement, zwei Funktionen ermöglicht werden, nämlich das Verursachen der Rotation des Spießguts und das Zusammendrücken des Spießguts während des Verpackens. Mit diesem Ansatz kann z.B. die Systemkomplexität verringert werden. So muss z.B. keine weitere Komponente geschaffen werden, die ein Zusammendrücken des Spießguts beim Verpacken verursacht.

In einem Beispiel kann das Mittel zum Zusammendrücken konfiguriert sein, die Kraft auf das Rotationselement im Wesentlichen entlang der Rotationsachse des Rotationselements auszuüben. Hierbei kann z.B. durch die eingebrachte Kraft das Rotationselement entlang der Rotationsachse bewegt werden, um ein Zusammendrücken des Spießguts zu ermöglichen. Beispielsweise kann entlang der Rotationsachse das Spießgut angebracht sein, sodass mit dem Bewegen des Rotationselements entlang der Rotationsachse ein Zusammendrücken des Spießguts erfolgt. Wie erwähnt kann das Spieß mit dem Spießgut z.B. so angeordnet werden, dass die Spießachse im Wesentlichen mit der Rotationsachse zusammenfällt. In so einem Fall kann mit dem Bewegen des Rotationselements entlang der Rotationsachse die Kraft auch entlang der Spießachse auf das Spießgut eingebracht werden. Somit kann also das Spießgut entlang der Spießachse während des Verpackens zusammengedrückt werden.

In einem Beispiel kann die Kraft derart gestaltet sein, sodass die Rotation des Rotationselements in die Rotation des Spießguts an dem Spieß übertragen wird und gleichzeitig ein Zusammendrücken des Spießguts an dem Spieß erfolgt, insbesondere während des Verpackens des Spießguts.

Die Kraft, die auf das Rotationselement ausgeübt wird, kann also derart gewählt sein, dass diese ausreicht, eine Rotation des Spießguts zu verursachen, und gleichzeitig auch ausreicht ein Zusammendrücken des Spießguts zu verursachen.

In einem Beispiel sei erwähnt, dass zumindest eine Seite des Rotationselements zumindest eine Krümmung aufweisen kann.

So kann in einem Beispiel in einem Kurvenverlauf einer Kontur entlang einer Seite des Rotationselements zumindest eine Krümmung vorliegen. Die Kontur kann also zumindest eine lokale Abweichung von einer Geraden aufweisen.

Die Seite mit der zumindest einen Krümmung kann z.B. eine Seite des Rotationselements umfassen, die zum Spießgut gewandt ist. Das Rotationselement muss also nicht zwangsweise Seiten haben, die eine ausschließlich ebene Fläche haben. Beispielweise kann die Kontur in einem Querschnitt des Rotationselements abgelesen werden (z.B. bei einem Querschnitt durch die Rotationsachse des Rotationselements). In einem Beispiel kann die Kontur bezüglich der Rotationsachse (im Wesentlichen) symmetrisch sein. Zur Verdeutlichung einer Kontur einer Seite des Rotationselements kann zum Beispiel auch ein Koordinatensystem gebildet werden, wobei die Rotationsachse als eine y-Achse aufgefasst werden kann, wobei eine dazu senkrechte Achse eine x-Achse bildet. Der Kurvenverlauf der Kontur einer Seite des Rotationselements kann dann anhand dieses Koordinatensystems beschrieben werden (z.B. über eine Funktion f(x)).

Beispielsweise kann die Kontur achsensymmetrisch zu der y-Achse sein, wobei im Kurvenverlauf der Kontur zumindest ein lokaler Anstieg ungleich null ist. Beispielsweise können bei einer Achsensymmetrie des Kurvenverlaufs zur y-Achse zumindest zwei Krümmungen vorliegen.

In einem Beispiel eines Kurvenverlaufs mit einer Achsensymmetrie zur y-Achse kann bis zu einem betragsmäßigen Wertebereich W der x-Achse zunächst keine Krümmung der Kurve vorliegen. Das heißt, für den Kurvenverlauf der Kontur gibt es im Bereich x < IWI (also x kleiner als der Betrag von W) zunächst keine Krümmung. Die Kurve kann z.B. eine Gerade mit Anstieg Null darstellen. Dieser Verlauf kann also einer planen Ebene des Rotationselements entsprechen. Beispielweise kann dann ab dem Wertebereich W (also x > IWI) jeweils eine lokale Krümmung vorliegen, sodass sich dort eine Anstiegsänderung des Kurvenverlaufs ergibt. Beispielsweise kann für x > IWI ein Anstieg von y-Werten der Kurve vorliegen.

In einem Beispiel ist auch denkbar, dass ein konvexer, konkaver oder parabelförmiger Kurvenverlauf der Kontur vorliegt.

Durch die hierin beschriebene Krümmung des Rotationselements kann z.B. ermöglicht werden, dass beim Rotieren des Rotationselements während des Verpackens sich Verpackungsmaterial schwerer am Rotationselement verfängt. Denn die Krümmung an einer Seite des Rotationselements kann z.B. eine entsprechende Führungsfläche an dieser Seite aufspannen, an der das Verpackungsmaterial beim Verpacken seitlich anliegen und somit geführt werden kann. Mit diesem Ansatz kann dem entgegengewirkt werden, dass beim Verpacken des Spießguts ein Verpacken des Rotationselements stattfindet. So kann das Risiko verringert werden, dass auf gegenüberliegenden Seiten des Rotationselements Verpackungsmaterials angebracht wird oder sich verfängt.

Im Folgenden seien weitere Beispiele des Rotationselements beschrieben, wobei dessen Ausgestaltung und Wirkung hinsichtlich der zweiten Einheit aufgeführt werden. Der Kurvenverlauf der Kontur einer Seite des Rotationselements kann für diese Bespiele entsprechend gelten.

In einem Beispiel kann eine Seite des Rotationselements zu einer Ablage gewandt sein, auf der die erste Einheit positioniert werden kann, wobei ein erster Flächenabschnitt der zur Ablage gewandten Seite des Rotationselements eine kürzere Distanz zu einer Tangentialebene der Ablage aufweist, als ein zweiter Flächenabschnitt der zur Ablage gewandten Seite des Rotationselements. Die Tangentialebene kann z.B. an einem Ablagepunkt der Ablage gebildet werden.

Beispielsweise kann die Ablage eine (im Wesentlichen) plane Ebene umfassen, wobei die Tangentialebene bezüglich eines Ablagepunktes der planen Ebene gebildet werden kann. Der Ablagepunkt kann z.B. der Ablagepunkt sein, an dem die erste Einheit aufliegt. Die Distanzen der Flächenabschnitte zur Tangentialebene können hierbei die Distanzen umfassen, die senkrecht von der Tangentialebene zum entsprechenden Flächenabschnitt vorliegen. Die Distanzen können also die kürzest möglichen Distanzen sein, die von den jeweiligen Flächenabschnitten zur Tangentialebene gebildet werden können.

Mit diesem Ansatz kann ermöglicht werden, das Verpacken des Spießguts zumindest teilweise zu erleichtern.

Beispielsweise kann der erste Flächenabschnitt des Rotationselements dazu eingerichtet sein, mit dem Spießgut in Verbindung zu stehen, insbesondere während des Verpackens des Spießguts. In diesem Fall kann also die Distanz zwischen dem ersten Flächenabschnitt und der Ablage optimiert sein, dass Spießgut zu kontaktieren für die Rotation und das Zusammendrücken des Spießguts. Mit dem zweiten Flächenabschnitt des Rotationselements kann demgegenüber ein Spielraum geschaffen werden. Denn die Distanz zwischen dem zweiten Flächenabschnitt und der Tangentialebene ist größer als die Distanz zwischen dem ersten Flächenabschnitt und der Tangentialebene. Dieser Spielraum kann genutzt werden, das Verpacken des Spießguts zumindest teilweise effizienter zu gestalten.

In einem Beispiel kann der erste Flächenabschnitt näher an der Rotationsachse des Rotationselements sein als der zweite Flächenabschnitt. In diesem Fall kann also Spielraum am Rande des Rotationselements vorliegen. Denn der zweite Flächenabschnitt (am Rande des Roationselements, weiter entfernt von der Rotationsachse) hat auch eine größere Distanz zu der Tangentialebene der Ablage. Für den Verpackungsvorgang liegt also am Rande des Rotationselements, im Bereich des zweiten Flächenabschnitts mehr Spielraum zur Verfügung. Beispielsweise kann der zweite Flächenabschnitt durch den geschaffenen Spielraum auch als Führungsfläche fungieren, an der das Verpackungsmaterial beim Verpacken seitlich anliegen und somit geführt werden kann. Einem Umhüllen des Rotationselements durch Verpackungsmaterial kann somit entgegengewirkt werden (wie hierin beschrieben).

In einem Beispiel kann der zweite Flächenabschnitt den ersten Flächenabschnitt zumindest teilweise umgeben, wobei der zweite Flächenabschnitt eine Schräge und/oder Krümmung hinsichtlich des ersten Flächenabschnitts darstellt. In diesem Beispiel kann gewährleistet werden, dass bei Rotation des Rotationselements sich im Wesentlichen auch eine homogene Angriffsfläche über den ersten und zweiten Flächenabschnitt bildet. Denn durch das Umgeben des ersten Flächenabschnitt durch den zweiten Flächenabschnitt ist zumindest teilweise eine Rotationssymmetrie gegenüber der Rotationsachse des Rotationselements gegeben. Beispielsweise kann der zweite Flächenabschnitt den ersten Flächenabschnitt auch vollständig umgeben, sodass der zweite Flächenabschnitt den ersten Flächenabschnitt umrandet.

In einem Beispiel kann der erste Flächenabschnitt eine (im Wesentlichen) plane Ebene darstellen, wobei der zweite Flächenabschnitt den ersten Flächenabschnitt zumindest teilweise umgibt, wobei der zweite Flächenabschnitt eine Schräge und/oder Krümmung hinsichtlich des ersten Flächenabschnitts darstellt. In diesem Beispiel kann die Kontur entlang dem ersten und zweiten Flächenabschnitt der Kontur eines Tellers ähneln, wobei die plane Ebene eine Auflageseite eines Teller darstellen kann. Ferner kann eine derartige Kontur auch einer Scheibe ähneln, deren Ränder abgeschrägt bzw. gekrümmt sind.

In einem Beispiel kann der erste Flächenabschnitt im Wesentlichen eine plane Ebene umfassen, und der zweite Flächenabschnitt sich in einem Winkel hinsichtlich der planen Ebene wegerstrecken, wobei der Winkel zwischen 5° und 80° liegen kann, bevorzugt zwischen 5° und 60° liegen kann, mehr bevorzugt zwischen 5° und 45° liegen kann, am meisten bevorzugt zwischen 5° und 30° liegen kann.

In einem Beispiel kann die zweite Einheit eine Ablage umfassen, auf der die erste Einheit positioniert werden kann, wobei das Mittel zum Zusammendrücken umfasst: zumindest eine Führung mit einer Führungsachse senkrecht zu der Ablage; einen Kopf, der mit der Führung gekoppelt ist und entlang der Führungsachse bewegt werden kann; wobei das Mittel zum Zusammendrücken konfiguriert ist, eine Bewegung des Kopfes in Richtung der Ablage zu verursachen, um eine Kraft auf das Spießgut des Spießes auszuüben, insbesondere während des Verpackens des Spießguts. Durch die Kraft kann z.B. ein Zusammendrücken von Spießgut auf dem Spieß bewirkt werden, insbesondere während des Bearbeitens des Spießguts (z.B. während eines Verpackens des Spießguts).

Die Ablage der zweiten Einheit kann der (hierin beschriebenen) Ablage des Systems entsprechen. Beispielsweise kann die Ablage der zweiten Einheit eine (im Wesentlichen) plane Ebene umfassen, auf der die erste Einheit positioniert werden kann. Die Ablage kann z.B. in einer bestimmten Höhe des zweiten Systems vorliegen (z.B. in einer Höhe größer als 0.5 m, größer als 0.75 m oder größer als 1 m, wobei die Höhe z.B. geringer als 1.80 m, geringer als 1.90 m, oder geringer als 2 m sein kann).

Zum Beispiel kann die Führung eine Schiene umfassen, welche die Führungsachse definiert. Der Kopf kann dabei mit der Schiene gekoppelt sein, sodass der Kopf entlang der Schiene bewegt werden kann.

In einem Beispiel kann bei Positionieren der ersten Einheit auf der Ablage der Spieß sich im Wesentlichen senkrecht zu der Ablage erstrecken.

Durch das Bewegen des Kopfes entlang der Führungsachse in Richtung der Ablage kann also das Spießgut entlang der Spießachse zusammengedrückt werden.

In einem Beispiel kann das Mittel zum Zusammendrücken einen Führungsantrieb umfassen, um den Kopf entlang der Führungsachse für das Zusammendrücken des Spießguts zu bewegen. Der Führungsantrieb kann also ermöglichen, dass eine geeignete Kraft auf das Spießgut eingebracht wird, sodass ein Zusammendrücken des Spießguts während des Verpackens des Spießguts erfolgt. Beispielsweise kann der Führungsantrieb einen pneumatischen Antrieb umfassen, wobei auch andere Antriebe möglich sind.

In einem Beispiel kann das Rotationselement an dem Kopf angebracht sein. Somit kann bei dem Verursachen der Bewegung des Kopfes zur Ablage, verursacht werden, dass das Mittel zum Zusammendrücken die Kraft auf das Rotationselement ausübt, wobei diese Kraft in Richtung der Ablage gerichtet ist. Durch das Verursachen der Bewegung des Kopfes kann also die hierin beschriebenen Kraft auf das Rotationselement ausgeübt werden. Dies Kraft kann entsprechend auf das Spießgut übertragen werden. Zur Vollständigkeit sei erwähnt, dass das Verursachen der Bewegung des Kopfes nicht zwangsweise immer eine merkliche Änderung des Kopfes darstellen muss. Denn beispielsweise kann das Spießgut und/oder das Spieß eine Kraft entgegen der Bewegung des Kopfes ausüben. In so einem Fall wird bei einem Verursachen einer Bewegung des Kopfes zur Ablage aber eine Kraft in Richtung der Ablage ausgeübt, worauf es gemäß der hierin beschriebenen Offenbarung ankommt, um ein Zusammendrücken von Spießgut zu ermöglichen.

In einem Beispiel kann die Führungsachse der Führung parallel zur Rotationsachse des Rotationselements sein.

In einem allgemeineren Beispiel muss das Rotationselement nicht zwangsweise am Kopf angebracht sein, wobei in so einem Fall das Rotationselement anderweitig oberhalb der Ablage positioniert sein kann. Beispielsweise kann das Rotationselement anderweitig oberhalb einer Spitze der ersten Einheit angebracht sein (z.B. über eine separate Einheit).

In einem anderen Beispiel kann das Mittel zum Zusammendrücken umfassen: zumindest eine Führung mit einer Führungsachse parallel zur Rotationsachse des Rotationselements; einen Kopf, der mit der Führung gekoppelt ist und entlang der Führungsachse bewegt werden kann; wobei das Mittel zum Zusammendrücken konfiguriert ist eine Bewegung des Kopfes entlang der Führungsachse zu verursachen, um eine Kraft entlang der Rotationsachse auszuüben. Die hierin beschriebenen Merkmale und Beispiele hinsichtlich eines Mittels zum Zusammendrücken umfassend mindestens eine Führung mit einer Führungsachse senkrecht zur Ablage können auch für dieses Beispiel angewandt werden (und umgekehrt). Beispielsweise kann die Rotationsachse (im Wesentlichen) senkrecht zur Ablage der zweiten Einheit ausgelegt sein.

In einem Beispiel kann die erste Einheit ein frei positionierbares Spießgestell mit dem Spieß umfassen, wobei durch die Übertragungseinheit eine Rotation des Spießguts bewirkt werden kann und die erste Einheit eine passive Stütze für die Rotation des Spießguts darstellt. Beispielsweise kann das frei positionierbare Spießgestell genutzt werden, über ein oder mehrere Produktionsschritte Spießgut an dem Spieß des Spießgestells anzubringen. Hierbei ist ein frei positionierbares Spießgestelle besonders nützlich, da dieses leicht an verschiedenen Stellen zur Bearbeitung positioniert werden kann. Dieses frei positionierbare Spießgestell kann dann (als erste Einheit) auf der Ablage der zweiten Einheit des Systems abgestellt werden, sodass dann über das so gebildete System das Zusammendrücken des Spießguts währen des Verpackens des Spießguts erfolgt. Das System kann also so eingerichtet sein, dass auch mit passiven Spießgestellen, die keine aktiven Rotationsmittel haben, ein Zusammendrücken von Spießgut während eines Verpackens des Spießguts erfolgen kann. Somit kann auf vergleichsweise komplizierte Spießgestelle verzichtet werden, die für eine Rotation besonders ausgelegt sein müssen.

In einem Beispiel kann das Rotationselement ein Kopplungselement aufweisen, welches eine Kopplung zwischen Rotationselement und Spieß ermöglicht. Die Kopplung kann z.B. eine kraftschlüssige Verbindung umfassen. Zum Beispiel kann ein Verschluss zwischen Rotationselement und Spieß über die Kopplung vorliegen. In einem anderen Beispiel kann die Kopplung lediglich eine Ausrichtungsstütze zwischen Rotationselement und Spieß darstellen.

In einem Beispiel kann das Kopplungselement eine Form umfassen, sodass das Kopplungselement in eine Aussparung des Spießes zum Koppeln mit dem Spieß eingeführt werden kann. Das Kopplungselement kann z.B. eine Form umfassen, die in die Aussparung hineinpasst, sodass das Rotationselement nicht nur über einer Seite auf dem Spieß aufsitzen kann, sondern durch das Kopplungselement in der Aussparung auch vor seitlichen Verkippungen zumindest teilweise geschützt ist.

Wie erwähnt, kann der Spieß zumindest teilweise hohlförmig sein (z.B. kann der Spieß ein Rohr sein). In diesem Fall kann der entsprechende zugängliche Innenraum des Spießes die Aussparung darstellen, in die das Kopplungselement eingeführt werden kann.

In einem Beispiel kann das Kopplungselement einen Stift umfassen, wobei der Stift in die Aussparung des Spießes zum Koppeln mit dem Spieß eingeführt werden kann.

In einem Beispiel kann das Rotationselement eine Ausnehmung umfassen, sodass ein Abschnitt des Spießes in die Ausnehmung des Rotationselements eingeführt werden kann. Durch die Ausnehmung kann der Spieß kann also zumindest teilweise in das Rotationselement eingeführt werden. Beispielsweise kann die Ausnehmung so dimensioniert sein, dass im Wesentlich der Spieß gerade in die Ausnehmung passt. Die Ausnehmung kann z.B. um die Rotationsachse des Rotationselements herum ausgebildet sein. Über die Ausnehmung kann Spielraum geschaffen werden. Beispielsweise kann Spießgut bis an die Spitze des Spießes angebracht worden sein. Bei Anbringen des Rotationselements an dem Spieß, vor dem Verpackungsvorgang, kann in diesem Fall durch die Ausnehmung Spießgut von dem Rotationselement leicht weggedrückt werden. Das Spießgut kann also um eine bestimmte Distanz von der Spitze weggeschoben werden. Anschließend kann, wie erwähnt, über die zweite Einheit das Zusammendrücken des Spießguts während des Verpackens stattfinden. Nach dem Verpackungsvorgang kann das Rotationselement von dem Spieß entfernt werden. Der Erfinder hat erkannt, dass es dabei zu einer leichten Relaxation des Spießguts kommen kann, sodass das Spießgut nach dem Verpackungsvorgang leicht entlang der Spießachse expandiert. Durch die Ausnehmung am Rotationselement ist das Spießgut jedoch initial um eine bestimmte Distanz von der Spitze weggeschoben. Mit diesem Ansatz wird als dem entgegengewirkt, dass bei einer Expansion nach einem Verpackungsvorgang das Spießgut über die Spitze hinaus expandiert.

In einem Beispiel kann sich ein Abschnitt des Kopplungselements innerhalb der Ausnehmung des Rotationselements erstrecken. Beispielsweise kann das Kopplungselement aus der Ausnehmung herausragen. Bei einer Verbindung von Rotationselement und Spieß kann entsprechend das Kopplungselement in der Aussparung des Spießes sein, wobei ein Abschnitt des Spießes in der Ausnehmung des Rotationselements befindlich sein kann. Beispielsweise kann der Spieß ein Rohr mit einem Innendurchmesser und einem Außendurchmesser sein. Hierbei kann das Kopplungselement einen geringeren Durchmesser haben, als der Innendurchmesser des Rohres, während der Außendurchmesser des Rohres geringer sein kann als der Durchmesser der Ausnehmung in dem Rotationselement.

In einem Beispiel kann das Rotationselement eine Struktur aufweisen, die in das Spießgut eingeführt werden kann. Die Struktur kann z.B. als eine Mitnahmestruktur aufgefasst werden. So kann die Struktur eine zusätzliche Fixierung darstellen, sodass die Rotation des Rotationselements in eine Rotation des Spießguts umgesetzt wird. Durch das Einführen der Struktur in das Spießgut können die Rotationskräfte des Rotationselements effizienter auf das Spießgut übertragen werden.

In einem Beispiel kann die Struktur zumindest zwei Komponenten umfassen, die voneinander beabstandet sind, wobei jede Komponente in das Spießgut eingeführt werden kann. In einem Beispiel kann die Struktur zumindest drei Komponenten aufweisen, die voneinander beabstandet sind, wobei jede der drei Komponenten in das Spießgut eingeführt werden kann.

Beispielsweise können die Komponenten der Struktur aus länglichen Geometrien aufgebaut sein, die in das Spießgut eingeführt werden können. Beispielsweise kann eine Komponente der Struktur eine zylindrische Form aufweisen (z.B. ein Nagel, ein Stift, ein Bolzen).

In einem Beispiel kann das Rotationselement über eine lösbare Kupplung mit einer Rotationsbewegung des Rotationsantriebs gekoppelt werden. Beispielsweise kann das Rotationselement somit per Hand von der zweiten Einheit gelöst werden. Dies kann beispielsweise für eine Reinigung und/oder Wartung nützlich sein. Zum Beispiel kann das Rotationselement an dem hierin beschriebenen Kopf der zweiten Einheit angebracht sein, wobei das Rotationselement durch die lösbare Kupplung von dem Kopf bei Bedarf gelöst werden kann.

In einem Beispiel kann das System ferner eine dritte Einheit umfassen, die ein Mittel zum Bearbeiten des Spießguts mit einer Folie umfasst. In einem Beispiel kann die dritte Einheit und die zweite Einheit in einer Vorrichtung realisiert sein. Das Mittel zum Bearbeiten des Spießguts mit der Folie kann z.B. ein Mittel zum Verpacken des Spießguts mit der Folie umfassen.

In einem Beispiel kann das Mittel zum Bearbeiten einen Rollenhalter zum Halten einer Folienrolle umfassen, wobei der Rollenhalter senkrecht zu einer Ablage der zweiten Einheit ist, auf der die erste Einheit positioniert werden kann, wobei das Mittel zum Bearbeiten konfiguriert ist, den Rollenhalter während des Bearbeitens (zumindest) senkrecht zu der Ablage zu bewegen. Wie erwähnt, kann hierbei das Mittel zum Bearbeiten ein Mittel zum Verpacken des Spießguts umfassen. Zum Beispiel kann bei einem Verpackungsvorgang die erste Einheit mit dem Spieß zunächst auf der (hierin erwähnten) Ablage positioniert werden. Dabei kann die erste Einheit so positioniert werden, dass die Spießachse im Wesentlichen mit der Rotationsachse des Rotationselements zusammenfällt. Anschließend kann das Rotationselement mit dem Spießgut (und/oder dem Spieß) gekoppelt werden. Ein Folienabschnitt einer Folienrolle des Mittels zum Bearbeiten kann dann an dem Spießgut angebracht werden. Anschließt kann ein Verpacken des Spießguts über das Mittel zum Bearbeiten erfolgen, wobei während des Verpackens über die zweite Einheit das Spießgut des Spießes zusammengedrückt wird.

In einem Beispiel kann das System eine Recheneinheit umfassen (z.B. in der zweiten und/oder dritten Einheit). Die Recheneinheit kann z.B. die Vorgänge der zweiten Einheit mit dem Bearbeitungsvorgang (z.B. Verpackungsvorgang) der dritten Einheit abstimmen, sodass die hierin beschriebenen Schritte zum Zusammendrücken des Spießguts während des Bearbeitens erfolgen.

In einem Beispiel kann der Spieß zum Anbringen eines fleischhaltigen und/oder fleischähnlichen Lebensmittels geeignet sein.

Beispielsweise kann der Spieß zum Anbringen von Dönerfleisch geeignet sein. Beispielsweise kann der Spieß zum Anbringen von Kebab geeignet sein. Beispielsweise kann der Spieß zum Anbringen von Gyros geeignet sein. In einem Beispiel kann der Spieß auch zum Anbringen von vegetarischen und/oder veganen fleischähnlichen Lebensmitteln geeignet sein (z.B. veganem und/oder vegetarischem Kebab).

Ein zweiter Aspekt betrifft eine Vorrichtung zum Bearbeiten eines Spießguts umfassend: eine Ablage zum Positionieren eines Spießes mit dem Spießgut auf der Ablage; eine Vorrichtungseinheit umfassend: Mittel zum Zusammendrücken des Spießguts des Spießes, während ein Bearbeiten des Spießguts erfolgt.

In einem Beispiel kann die Vorrichtungseinheit die zweite Einheit des Systems des ersten Aspekts umfassen. In einem Beispiel kann die Vorrichtungseinheit auch ferner die dritte Einheit des Systems des ersten Aspekts umfassen.

Entsprechend können alle hierin beschriebenen Merkmale und Beispiele des Systems des ersten Aspekts auch für die Vorrichtung des zweiten Aspekts gelten bzw. angewandt werden. Ebenso können die hierin beschriebenen Merkmale und Beispiele der Vorrichtung des zweiten Aspekts auch für das System des ersten Aspekts gelten bzw. angewandt werden.

So kann also in einem Beispiel über die Vorrichtungseinheit das Spießgut des Spießes während des Verpackens des Spießguts zusammengedrückt werden.

Ein dritter Aspekt betrifft ein Verfahren zum Bearbeiten eines Spießguts umfassend: Zusammendrücken des Spießguts auf einem Spieß, während ein Bearbeiten des Spießguts erfolgt. In einem Beispiel kann das Zusammendrücken ein Zusammendrücken des Spießguts auf dem Spieß umfassen, währen ein Verpacken des Spießguts erfolgt.

In einem Beispiel kann das Verfahren ferner ein Rotieren des Spießguts auf dem Spieß während des Zusammendrückens des Spießguts auf dem Spieß umfassen.

In einem Beispiel kann ein Verfahren des dritten Aspekts mit dem hierin beschriebenen System des ersten Aspekts und/oder der hierin beschriebenen Vorrichtung des zweiten Aspekts durchgeführt werden.

Die hierin beschriebenen Merkmale und Beispiele hinsichtlich eines Systems oder eine Vorrichtung können entsprechend auch für das hierin beschriebene Verfahren des dritten Aspekts angewandt werden bzw. gelten. Ebenso können die hierin beschriebenen Merkmale und Beispiele hinsichtlich eines Verfahrens auch entsprechend für das hierin beschriebenen System oder die hierin beschriebene Vorrichtung gelten bzw. angewandt werden.

### 4. Kurzbeschreibung der Figuren

Nachfolgend werden Ausführungsbeispiele und Varianten der hierin beschriebenen Erfindung anhand der Figuren näher erläutert. Es zeigen
- Figur 1: eine schematische Darstellung eines ersten beispielhaften Systems gemäß der hierin beschriebenen Offenbarung;
- Figur 2: eine Darstellung eines zweiten beispielhaften Systems gemäß der hierin beschriebenen Offenbarung;
- Figur 3: eine vergrößerte Darstellung von Teilen des zweiten beispielhaften Systems der Figur 2;
- Figur 4: einen Querschnitt eines beispielhaften Rotationselements gemäß der hierin beschriebenen Offenbarung;
- Figur 5: eine schräge Draufsicht auf ein weiteres beispielhaftes Rotationselement gemäß der hierin beschriebenen Offenbarung;
- Figur 6: eine Darstellung einer ersten Einheit gemäß der hierin beschriebenen Offenbarung;
- Figur 7: eine Darstellung eines Teils einer ersten Einheit gemäß der hierin beschriebenen Offenbarung.

### 5. Detaillierte Beschreibung der Figuren und möglicher Ausführungsbeispiele

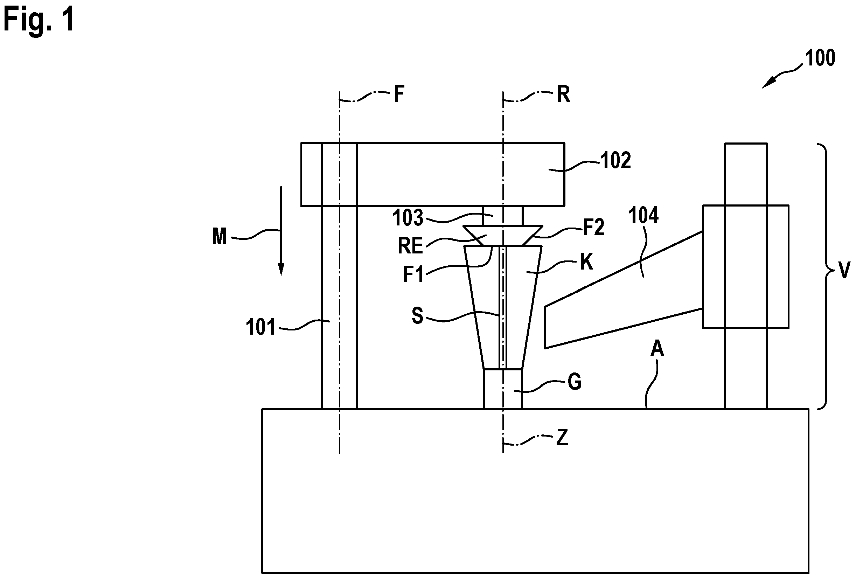

Figur 1 zeigt eine schematische Darstellung eines ersten beispielhaften Systems 100 gemäß der hierin beschriebenen Offenbarung. Figur 1 kann z.B. zur konzeptionellen Verdeutlichung der hierin beschriebenen Offenbarung herangezogen werden.

Das System 100 umfasst eine erste Einheit. Die erste Einheit kann ein Standgestell G umfassen. Ferner kann die erste Einheit einen Spieß S umfassen. Der Spieß S kann an dem Standgestell G angebracht sein.

An dem Spieß S der ersten Einheit kann Spießgut K angebracht sein. Das Spießgut K kann z.B. ein fleischhaltiges und/oder fleischähnliches Lebensmittel umfassen. Beispielsweise kann das Spießgut K Kebab umfassen.

Der Spieß S kann eine Spießachse Z definieren. Die Spießachse Z kann durch die längliche Erstreckung des Spießes S definiert sein, sodass sich die Spießachse Z entlang der längeren Ausdehnung des Spießes S erstreckt. Beispielsweise kann der Spieß S rotationssymmetrisch sein, wobei die entsprechende Symmetrieachse des Spießes die Spießachse Z definieren kann. Das Spießgut K kann um die Spießachse Z herum angebracht sein.

Das System 100 kann ferner eine zweite Einheit umfassen. Wie erwähnt, kann die zweite Einheit des Systems 100 die hierin beschriebene Vorrichtung des zweiten Aspekts umfassen. Die zweite Einheit des Systems 100 kann also auch als eine eigene Vorrichtung verstanden werden.

Die erste Einheit kann auf einer Ablage A einer zweiten Einheit des Systems 100 positioniert werden. In dem Beispiel der Fig. 1 ist die erste Einheit so auf der Ablage A positioniert, dass die Spießachse Z im Wesentlichen senkrecht zu der Ebene der Ablage A ist.

Die zweite Einheit des Systems 100 kann ein Rotationselement RE umfassen (wie hierin beschrieben). Das Rotationselement RE kann um eine Rotationsachse R rotierbar sein. Das Rotationselement RE kann über ein Kupplungselement 103 an einem Kopf 102 der zweiten Einheit angebracht sein. Der Kopf 102 kann an einer Führung 101 angebracht sein. Die Führung 101 kann sich z.B. von der Ablage Ader zweiten Einheit wegerstrecken (z.B. senkrecht zur Ablage A). Die Führung 101 kann eine Führungsachse F definieren, wobei der Kopf 102 entlang der Führungsachse F bewegbar sein kann. Die Führungsachse F kann z.B. parallel zur Rotationsachse R des Rotationselements RE ausgelegt sein. Erfolgt also eine Bewegung des Kopfes 102 entlang der Führungsachse F, wird das Rotationselement RE entlang der Rotationsachse R bewegt. In dem dargestellten Beispiel kann also das Rotationselement RE entlang der Führungsachse F zur Ablage A bewegt werden.

Die zweite Einheit kann z.B. einen Rotationsantrieb umfassen, um das Rotationselement RE um die Rotationsachse R rotieren zu lassen. Ferner kann die zweite Einheit z.B. einen Führungsantrieb umfassen, um den Kopf 102 entlang der Führungsachse F der Führung 101 zu bewegen.

Zusammenfassend kann über die Komponenten der zweiten Einheit ermöglicht werden, dass zum einen das Rotationselement RE um die Rotationsachse R rotiert, wobei ebenso eine Bewegung des Rotationselements RE entlang der Rotationsachse R verursacht werden kann. Mit dem Bewegen des Rotationselements RE entlang der Rotationsachse R kann eine Kraft entlang der Rotationsachse R eingebracht werden. Über diesen Grundmechanismus kann ein Zusammendrücken des Spießguts K an dem Spieß S ermöglicht werden, insbesondere während des Verpackens des Spießguts K.

Hierauf wird im Folgenden näher eingegangen.

So kann die erste Einheit mit dem Spießgut K an dem Spieß S derart an der Ablage A des Systems positioniert werden, sodass die Spießachse Z im Wesentlichen mit der Rotationsachse R des Rotationselements RE zusammenfällt (wie in Fig. 1 angedeutet). Zunächst kann das Rotationselement RE (mit dem Kopf 102) hierzu so angehoben sein, dass die erste Einheit unter dem Rotationselement RE entsprechend positioniert werden kann.

Für das Verpacken des Spießguts K kann das System z.B. eine dritte Einheit V umfassen. Die dritte Einheit V kann z.B. ein Mittel zum Verpacken umfassen. Über die dritte Einheit V kann z.B. eine Folie 104 an das Spießgut K zum Verpacken des Spießguts K herangezogen werden. Die dritte Einheit V kann z.B. auch für einen automatischen bzw. halbautomatischen Verpackungsvorgang konfiguriert sein und entsprechende Mittel aufweisen. Beispielsweise kann die dritte Einheit V Komponenten aufweisen, um die Folie 104 zu leiten und für einen Verpackungsvorgang in einer geeigneten Höhe bereitzustellen. In einem Beispiel kann zuerst die Folie 104 an dem Spieß S, Spießgut K und/oder Standgestell G fixiert werden. Dies kann z.B. erfolgen, nachdem die erste Einheit so positioniert wurde, dass die Spießachse Z im Wesentlichen mit der Rotationsachse R des Rotationselements zusammenfällt. Anschließend kann ein Verpacken des Spießguts K mit der dritten Einheit V hervorgerufen werden, was mit den Mechanismen der zweiten Einheit abgestimmt werden kann, sodass ein Zusammendrücken des Spießguts K während des Verpackens erfolgt. Beispielsweise kann das System 100 eine Recheneinheit mit einem Computerprogramm umfassen, welches die Vorgänge der dritten Einheit und der zweiten Einheit aufeinander abstimmt. Beispielsweise kann das System 100 auch entsprechende Steuermittel oder Bedienelemente umfassen, um manuell die zweite und die dritte Einheit zu steuern.

Zum Verpacken des Spießguts K kann das Rotationselement RE zunächst in Verbindung mit dem Spießgut K gebracht werden (wie hierin beschrieben). Beispielsweise kann hierzu ein leichtes Verfahren des Kopfes 102 entlang der Führungsachse F stattfinden. In einem Beispiel kann eine Fläche des Rotationselements RE mit dem Spießgut K in Verbindung gebracht werden.

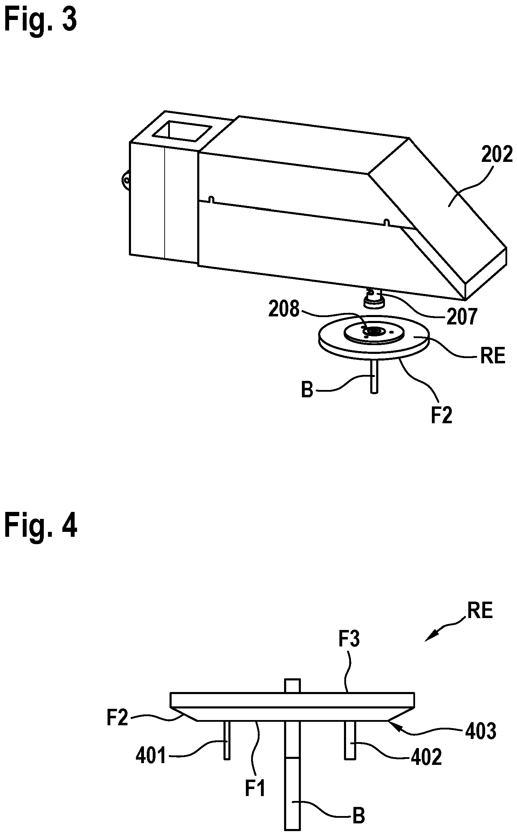

Das Rotationselement RE kann hierzu an der Seite die dem Spießgut K bzw. der Ablage A der zweiten Einheit zugewandt ist, einen ersten Flächenabschnitt F1 aufweisen. Der erste Flächenabschnitt F1 kann dazu eingerichtet sein, mit dem Spießgut K in Kontakt zu stehen, um die Verbindung zwischen dem Rotationselement RE und dem Spießgut K zu ermöglichen. Der erste Flächenabschnitt F1 kann z.B. eine im Wesentlichen plane Ebene aufweisen, die mit dem Spießgut K in Kontakt gebracht werden kann. Das Rotationselement RE kann ferner auch einen zweiten Flächenabschnitt F2 aufweisen, der sich von dem ersten Flächenabschnitt wegerstreckt. Beispielsweise kann das Wegerstrecken des zweiten Flächenabschnitt F2 dergestalt sein, dass der zweite Flächenabschnitt F2 einen höhere Distanz zur Ablage A hat als der erste Flächenabschnitt F1. Beispielweise kann sich der zweite Flächenabschnitt F2 somit vom Spießgut K wegerstrecken, sodass in der Umgebung des zweiten Flächenabschnitts Spielraum zwischen Spießgut K und Rotationselement RE geschaffen werden kann, wenn der erste Flächenabschnitt F1 mit dem Rotationselement RE in Verbindung steht. Der zweite Flächenabschnitt F2 kann somit eine Führungsfläche für die Folie 104 ermöglichen, falls die Folie 104 in einer Höhe des Rotationselements RE vorliegt. Dabei kann die Folie 104 bei Rotation des Rotationselements RE z.B. an der Führungsfläche anliegen, sodass einem Umhüllen des Rotationselements durch die Folie 104 entgegengewirkt werden kann. So kann z.B. vermieden werden, dass die Folie 104 auf der Seite des Rotationselements RE angebracht wird, die gegenüber der Seite mit dem ersten Flächenabschnitt F1 liegt. Zu weiteren Details des Rotationselements RE kann an dieser Stelle auch auf die Erklärungen zu Figur 4 verwiesen werden.

Nach Fixierung der Folie 104 an dem Spieß S, Spießgut K und/oder Standgestell G kann ein Verpackungsvorgang gestartet werden, bei dem das Spießgut K z.B. seitlich durch die Folie 104 verpackt wird.

Hierzu kann das Rotationselement RE in Rotation um die Rotationsachse R gebracht werden. Für das Verpacken kann es ausreichen, die Folie 104 in einer bestimmten Höhe zum Spießgut K bereitzustellen. Denn durch die Rotation des Rotationselementes RE kann auch eine Rotation des Spießguts K verursacht werden, wodurch sich die Folie 104 um das Spießgut K wickeln kann. Das Bereitstellen der Folie 104 in einer bestimmten Höhe kann z.B. über eine Steuerung der dritten Einheit V erfolgen.

So kann während der Rotation des Rotationselements RE ein Bewegen des Kopfes 102 in eine Kompressionsrichtung M der Führungsachse F erfolgen. Die Kompressionsrichtung M kann zur Ablage A der zweiten Einheit gerichtet sein. Durch das Bewegen des Kopfes 102 entlang der Kompressionsrichtung M kann entsprechend auch ein Bewegen des Rotationselements RE entlang der Kompressionsrichtung M zur Ablage A erfolgen. Entlang der Kompressionsrichtung M kann also ein entsprechender Kraftvektor entlang der Spießachse Z eingebracht werden. Dieser Kraftvektor kann also auch auf das Spießgut K eingebracht werden, wodurch ein Zusammendrücken des Spießguts K bewirkt wird, insbesondere während des Verpackens des Spießguts K.

Der Kraftvektor kann z.B. derart sein, dass durch das Zusammendrücken des Spießguts K über das Rotationselement RE, die Rotation des Rotationselements RE in eine entsprechende Rotation des Spießguts K um die Spießachse Z übertragen wird. Der Kraftvektor in Kompressionsrichtung M kann also nötig sein, um die Rotation des Spießguts K überhaupt zu ermöglichen.

Ferner kann der Kraftvektor in Kompressionsrichtung M auch eingesetzt werden, um das Spießgut K entlang der Spießachse Z im Volumen (z.B. kurzzeitig) zu verringern. Es kann also auch eine aktive Kompression des Spießguts K erfolgen.

Jedoch kann mit dem Zusammendrücken des Spießguts K über den Kraftvektor entlang der Kompressionsrichtung M auch lediglich einer Expansion des Spießguts K entlang der Spießachse Z zumindest teilweise entgegengewirkt werden. Denn durch den Kraftvektor entlang der Kompressionsrichtung M kann ermöglicht werden, dass mit dem Rotationselement RE nicht einfach ein passiver Aufsatz auf der Spießachse Z vorliegt, sondern auch ein aktives Blockiermittel zu Kräften, die in die Gegenrichtung der dargestellten Kompressionsrichtung M wirken. Das Zusammendrücken des Spießguts K (wie hierin beschrieben) muss also nicht zwangsweise eine Volumenverringerung des Spießguts K entlang der Spießachse Z nach sich ziehen, sondern kann auch einfach einer Volumensexpansion des Spießguts K entlang der Spießachse Z entgegenwirken. In so einem Fall kann z.B. durch Verursachen der Bewegung des Kopfes 102 in Kompressionsrichtung M eine Distanzverschiebung des Kopfes 102 nicht merklich auftreten. Jedoch wird durch das Verursachen der Bewegung des Kopfes 102 in die Kompressionsrichtung M ein Kraftvektor ausgeübt, der z.B. einer Volumensexpansion des Spießguts K entlang der Spießachse Z (entgegen der Kompressionsrichtung M) aktiv entgegenwirkt.

Das Bewegen des Kopfes 102 in Kompressionsrichtung M kann beispielsweise schon vor Beginn der Rotation des Rotationselements RE erfolgen. Somit kann gewährleistet werden, dass das Rotationselement RE vor Beginn der Rotation eine geeignete Verbindung mit dem Spießgut K eingeht, die ausreicht, dass Spießgut K in Rotation zu versetzen. Es ist jedoch auch denkbar, dass eine Bewegung des Kopfes 102 in Kompressionsrichtung M erst ab Beginn der Rotation des Rotationselements RE erfolgt. Der Kraftvektor entlang der Kompressionsrichtung M kann also im Wesentlichen erst zu Beginn der Rotation auf das Spießgut K eingebracht werden. Ebenso ist möglich, dass die Bewegung des Kopfes 102 in die Kompressionsrichtung M erst nach einer vorbestimmten Zeit ab Beginn der Rotation des Rotationselements gestartet wird. Der Kraftvektor entlang der Kompressionsrichtung M kann also ab der vorbestimmten Zeit nach Beginn der Rotation auf das Spießgut K eingebracht werden.

In einem Beispiel kann das Bewegen des Kopfes 102 in Kompressionsrichtung M während des Verpackens des Spießguts automatisch erfolgen. Beispielsweise kann dem Führungsantrieb der Führung 101 ein Signal übermittelt werden, dass ein Verpackungsvorgang startet. Basierend auf dem Signal kann der Führungsantrieb ein Bewegen des Kopfes 102 in Kompressionsrichtung M verursachen. Beispielsweise kann auch mit Beginn der Rotation des Rotationselements RE um die Rotationsachse R der Führungsantrieb der Führung 101 automatisch aktiviert werden, sodass sich der Kopf 102 in die Kompressionsrichtung M bewegt. In einem anderen Beispiel ist jedoch auch denkbar, dass das Bewegen des Kopfes 102 in Kompressionsrichtung M über eine manuelle Signalisierung erfolgt (z.B. über ein Betätigen eines entsprechenden Bedienelements durch einen Bediener).

Zusammenfassend kann also mit dem System 100 über das Rotationselement RE ein Kraftvektor auf das Spießgut K eingebracht werden, insbesondere während das Rotationselement RE rotiert. Die Rotation des Rotationselements RE kann hierbei Teil eines Verpackungsvorgangs sein. Durch diesen Mechanismus des Systems 100 kann also ein Zusammendrücken des Spießguts K während des Verpackens des Spießguts K erfolgen.

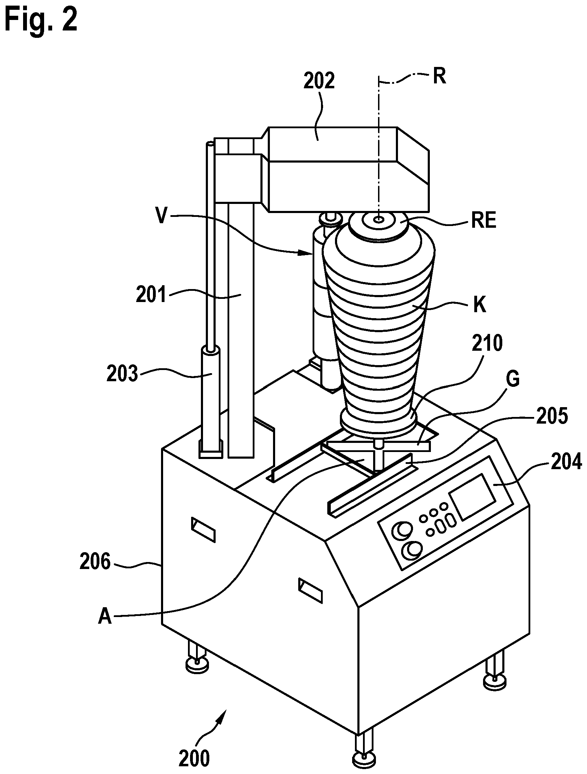

Figur 2 zeigt eine Darstellung eines zweiten beispielhaften Systems 200 gemäß der hierin beschriebenen Offenbarung. Insbesondere sind weitere technische Details im Vergleich zur konzeptionellen Figur 1 dargestellt. Daher wird hauptsächlich auf die ergänzenden Details der Figur 2 eingegangen.

In dem System 200 ist ebenso eine erste Einheit dargestellt. Die erste Einheit umfasst ein Standfuß G. Ferner umfasst die erste Einheit einen Unterteller 210. Die erste Einheit umfasst ebenso einen Spieß mit einer Spießachse, die jedoch in der Figur nicht bezeichnet sind. Der Spieß und die Spießachse erstrecken sich (wie in Fig. 1) senkrecht zum Standfuß G. Um den Spieß der ersten Einheit ist ein Spießgut K angebracht. Das Spießgut K sitzt in dem Beispiel auf dem Unterteller 210 auf.

Das System 200 umfasst ebenso eine zweite Einheit, die auch als eine eigene Vorrichtung ausgebildet sein kann. Die zweite Einheit kann hier ebenso eine Ablage A umfassen, auf der die erste Einheit (insbesondere deren Standfuß G) positioniert werden kann. Die Ablage A kann z.B. auf einem Gehäuse 206 der zweiten Einheit vorliegen. Das System 200 umfasst ferner einen Kopf 202 an dem ein Rotationselement RE angebracht ist. Das Rotationselements RE kann um eine Rotationsachse R rotieren, die sich senkrecht zur Ablage A der zweiten Einheit erstreckt. Beispielsweise kann der Kopf 202 einen Rotationsantrieb umfassen, um das Rotationselement RE rotieren zu lassen.

An der Ablage A kann eine Markierung 205 angebracht sein, um die erste Einheit für das Verpacken des Spießguts geeignet zu positionieren. Die Markierung 205 kann z.B. so ausgelegt sein, dass bei entsprechender Positionierung der ersten Einheit, die Spießachse des Spießes mit der Rotationsachse des Rotationselements RE (im Wesentlichen) zusammenfällt, wie hierin beschrieben.

Der Standfuß G und die Markierung 205 können in dieser Ansicht aufeinander abgestimmt sein. Die Markierung 205 kann z.B. ein oder mehrere Leisten umfassen, die an der Ablage A befestigt sind. Die Markierung 205 kann dabei so ausgelegt sein, dass der Standfuß G in einer vorbestimmten Position an den ein oder mehreren Leisten anliegen kann, um die erste Einheit geeignet zu positionieren. Zum Beispiel kann die Markierung 205 eine Leiste umfassen, an die der Standfuß G sich anlegen kann. Die Markierung 205 kann z.B. auch zumindest zwei Leisten umfassen, wobei sich der Standfuß G an die zumindest zwei Leisten anlegen kann, für eine geeignete Positionierung. Zum Beispiel können zwei Leisten der Markierung 205 senkrecht zueinander sein, sodass bei Anlegen des Standfußes G gegen die zwei Leisten eine gewünschte Position in einer x-Richtung und in einer dazu orthogonalen y-Richtung ermöglicht werden kann. In einem Beispiel können zwei Leisten der Markierung auch parallel zueinander sein, sodass bei Anlegen des Standfußes G gegen die zwei Leisten der Standfuß zumindest entlang der parallelen Erstreckung der Leisten eine gewünschte Ausrichtung ermöglicht wird. Alternativ oder zusätzlich kann die Markierung 205 auch eine farbige Markierung umfassen, um den Standfuß G geeignet zu positionieren, um die Spießachse des Spießes mit der Rotationsachse des Rotationselements RE auszurichten.

Wie erwähnt, umfasst die zweite Einheit des Systems 200 einen Kopf 202 mit einem Rotationselement RE. Der Kopf 202 ist in dem Beispiel an einer Führung 201 angebracht ist. Die Führung 201 definiert eine Führungsachse (in Fig. 2 nicht eingezeichnet), die senkrecht zur Ablage A ist. Der Kopf 202 kann entlang der Führungsachse bewegt werden. Auch in diesem Beispiel ist die Führungsachse parallel zur Rotationsachse R des Rotationselements RE. Über eine Bewegung des Kopfes 202 entlang der Führung 201 kann also das Rotationselement RE entlang der Rotationsachse R bewegt werden. Für die Bewegung des Kopfes 202 entlang der Führungsachse der Führung 201 kann die zweite Einheit einen Führungsantrieb 203 umfassen. Der Führungsantrieb 203 ist in diesem Beispiel mit dem Kopf 202 gekoppelt. Der Führungsantrieb 203 kann z.B. den Kopf 202 linear entlang der Führungsachse der Führung 201 verfahren. Beispielsweise kann der Führungsantrieb auf einem pneumatischen Prinzip basieren. Beispielsweise kann der Führungsantrieb 203 einen pneumatischen Kolben umfassen, der entlang der Führungsachse der Führung 201 verfahren werden kann, um eine entsprechende Bewegung des Kopfes 202 entlang der Führungsachse zu ermöglichen. Jedoch sind auch andere Antriebe denkbar, die ein lineares Verfahren des Kopfes 202 entlang der Führungsachse ermöglichen können.

Ferner ist in Fig. 2 auch eine dritte Einheit V dargestellt, die ein Mittel zum Verpacken umfasst. Erkennbar ist eine Halterung, die sich senkrecht zur Ablage A der zweiten Einheit erstreckt. An der Halterung kann z.B. eine Folienrolle angebracht sein. Somit kann für ein Verpacken die Folie von der Halterung an das Spießgut K seitlich herangezogen werden. Die dritte Einheit V kann z.B. konfiguriert sein, die Halterung mit der Folie senkrecht zur Ablage A der zweiten Einheit zu bewegen, um die Folie während des Verpackens auf einer geeigneten Höhe entlang der Spießachse bereitzustellen.

Das System 200 umfasst ferner eine Bedieneinheit 204. Die Bedieneinheit 204 kann z.B. ein oder mehrere Bedienelemente umfassen. Über die Bedienelemente kann z.B. die zweite Einheit und/oder die dritte Einheit gesteuert werden. Beispielweise kann über die Bedieneinheit 204 eine Rotation des Rotationselements RE gesteuert werden. Beispielsweise kann über die Bedieneinheit 204 ein Bewegen des Kopfes 202 entlang der Führungsachse der Führung 201 verursacht werden. Über die Bedieneinheit 204 kann also verursacht werden, dass ein Kraftvektor auf die Spießachse des Spießes eingebracht werden kann, um ein Zusammendrücken des Spießguts während des Verpackens zu bewirken (wie hierin beschrieben). Über die Bedieneinheit 204 kann z.B. auch die dritte Einheit V gesteuert werden.

Figur 3 zeigt eine vergrößerte Darstellung von Teilen des zweiten beispielhaften Systems der Figur 2. Insbesondere sind Teile des Kopfes 202 und des Rotationselements RE dargestellt. Der Kopf 202 kann einen Rotationsantrieb umfassen. Beispielsweise kann der Kopf 202 eine Welle umfassen, die durch den Rotationsantrieb in Rotation versetzt werden kann. Diese Rotation kann auf das Rotationselement RE übertragen werden. Hierzu kann der Kopf 202 eine erste Kupplungseinheit 207 aufweisen. Beispielsweise kann die erste Kupplungseinheit 207 durch den Rotationsantrieb in Rotation versetzt werden. Die erste Kupplungseinheit 207 kann über ihre Ausgestaltung mit dem Rotationselement RE verbunden werden. Für die Verbindung kann das Rotationselement RE eine entsprechende zweite Kupplungseinheit 208 umfassen, sodass ein Zusammenschluss von erster Kupplungseinheit 207 und zweiter Kupplungseinheit 208 vorgenommen werden kann. Durch das Zusammenspiel der ersten Kupplungseinheit 207 mit der zweiten Kupplungseinheit 208 kann also eine Kupplung zwischen Kopf 202 und Rotationselement RE vorgenommen werden. Die Kupplung kann z.B. lösbar gestaltet sein, sodass ein Bediener bei Bedarf das Rotationselement RE vom Kopf 202 lösen kann (z.B. für eine Reinigung und/oder Wartung der zweiten Einheit bzw. des Rotationselements). Hierzu können die erste Kupplungseinheit 207 und die zweite Kupplungseinheit 208 z.B. einen Schnellverschluss bilden. Über die Kupplung kann z.B. eine Rotationsbewegung der ersten Kupplungseinheit 207 auch in eine Rotationsbewegung des Rotationselements RE umgewandelt werden.

Zu erkennen ist in Figur 3 ferner der zweite Flächenabschnitt F2 des Rotationselements RE, der sich von dem ersten Flächenabschnitt F1 wegerstreckt.

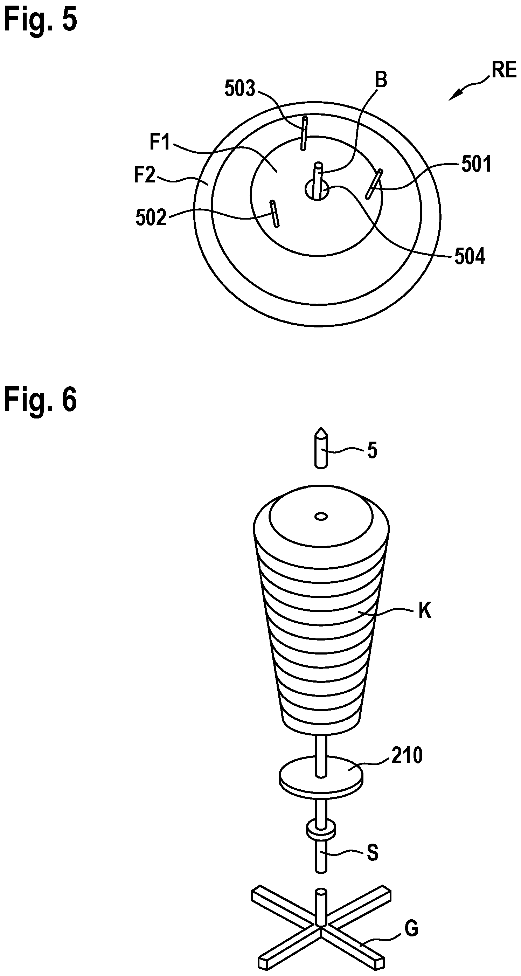

Ebenso ist in Figur 3 ein Kopplungselement B des Rotationselements RE dargestellt, welches eine Kopplung zwischen Rotationselement und Spieß ermöglicht (wie hierin beschrieben). Zur Funktionsweise sei zu den Erklärungen der Figur 4 und 5 verwiesen.

So zeigt Figur 4 einen Querschnitt eines beispielhaften Rotationselements RE gemäß der hierin beschriebenen Offenbarung. Das Rotationselement RE umfasst ein Kopplungselement B. Das Kopplungselement B ist entlang der Rotationsachse des Rotationselements ausgerichtet. Insbesondere hat das Kopplungselement B eine längliche Erstreckung entlang der Rotationsachse des Rotationselements. Dies kann eine Kopplung mit dem Spieß ermöglichen. So weist das Rotationselement Reinen ersten Flächenabschnitt F1 auf, der z.B. mit dem Spießgut in Verbindung gebracht werden kann, wie hierin beschrieben. Der erste Flächenabschnitt kann z.B. eine ebene Fläche aufweisen, die sich senkrecht zur Rotationsachse des Rotationselements erstrecken kann. Das Kopplungselement B kann sich von dem ersten Flächenabschnitt wegerstrecken (wie in Figur 4 angedeutet), sodass sich das Kopplungselement B in Richtung der Ablage A der zweiten Einheit erstreckt.

Hierbei kann das Kopplungselement B eingerichtet sein, in den Spieß der ersten Einheit eingeführt zu werden. Beispielsweise kann der Spieß einen Hohlraum umfassen, in den das Kopplungselement B eingeführt werden kann. Der Außendurchmesser des Kopplungselements B kann hierbei kleiner sein, als der Durchmesser des Hohlraums des Spießes, sodass das Kopplungselement B in den Hohlraum eingeführt werden kann. Zum Beispiel kann das Spieß einen Rohrabschnitt umfassen, in den das Kopplungselement B eingeführt werden kann.

Ferner ist in Figur 4 eine erste Struktur 401 und eine zweite Struktur 402 dargestellt. Diese können auch als Mitnahmestrukturen aufgefasst werden. Die erste Struktur 401 und die zweite Struktur 402 stellen längliche Geometrien dar, die sich von dem ersten Flächenabschnitt F1 wegerstrecken. Die erste Struktur 401 und die zweite Struktur 402 sind im Wesentlichen parallel zur Rotationsachse des Rotationselements ausgerichtet, jedoch zu dieser versetzt. Die erste Struktur 401 und die zweite Struktur 402 können dazu dienen, in das Spießgut, welches um den Spieß angeordnet ist, eingeführt zu werden. Somit können diese Strukturen 401, 402 als Mitnahmestrukturen dienen, welche die Übertragung der Rotation des Rotationselements RE auf das Spießgut unterstützen. So können die Strukturen 401, 402 über eine bestimmte Distanz in das Spießgut eingeführt sein, sodass bei einer Rotation des Rotationselements RE die Rotationskräfte zumindest teilweise über diese Distanz auf das Spießgut wirken. Dies kann die Übertragung der Rotation auf das Spießgut unterstützen. Ferner kann eine zusätzliche Fixierung durch die Strukturen 401, 402 zwischen Rotationselement RE und Spießgut ermöglicht werden.

An dem Rotationselement RE können auch mehr als zwei Mitnahmestrukturen angebracht sein. Beispielsweise können zumindest drei, zumindest vier oder auch zumindest 10 Mitnahmestrukturen an dem Rotationselement RE angebracht sein. Die Mitnahmestrukturen können z.B. auch in Form von Nägeln realisiert sein.

Ferner ist an dem Rotationselement RE der Figur 4 auch ein zweiter Flächenabschnitt F2 erkennbar, der sich von dem ersten Flächenabschnitt F1 wegerstreckt. Das Rotationselement RE hat somit zumindest eine lokale Krümmung 403. Der zweite Flächenabschnitt F2 kann den ersten Flächenabschnitt F1 umranden. Bei Anbringen des Rotationselements RE an dem Kopf der zweiten Einheit, kann also eine höhere Distanz zwischen dem zweiten Flächenabschnitt F2 und der Ablage vorliegen, als zwischen dem ersten Flächenabschnitt und der Ablage. Ebenso kann eine höhere Distanz zwischen dem zweiten Flächenabschnitt F2 und dem Spießgut ermöglicht werden, wenn der erste Flächenabschnitt F1 in Verbindung mit dem Spießgut gebracht wird.

Bei Rotation des Rotationselements RE kann der zweite Flächenabschnitt F2 eine Führungsfläche für eine Folie definieren (wie hierin beschrieben). So kann die seitlich bereitgestellte Folie an der (rotierenden) Führungsfläche des zweiten Flächenabschnitt F2 anliegen. Somit kann dem entgegengewirkt werden, dass die Folie an die Fläche einer Kopfseite F3 des Rotationselements gelangt.

Figur 5 zeigt eine schräge Draufsicht auf ein weiteres beispielhaftes Rotationselement RE gemäß der hierin beschriebenen Offenbarung. In Figur 4 ist das Rotationselement vom Kopf gelöst und so positioniert, dass die Flächen, die eigentlich zur Ablage gerichtet sind, nach oben zeigen. Zu erkennen ist auch hier, dass das Rotationselement RE einen ersten Flächenabschnitt F1 und einen zweiten Flächenabschnitt F2 umfasst. Auch in diesem Beispiel weist der erste Flächenabschnitt F1 eine plane Ebene auf, wobei sich der zweite Flächenabschnitt F2 von dem ersten Flächenabschnitt wegerstreckt. Zu erkennen sind drei Strukturen 501, 502, 503, welche die hierin beschriebenen Mitnahmestrukturen darstellen.

Ebenso ist erkennbar, dass das Rotationselement RE ein Kopplungselement B umfasst, welches sich entlang der Rotationsachse des Rotationselements RE erstreckt. Ferner ist zu erkennen, dass das Rotationselement RE eine Ausnehmung 504 umfasst. Die Ausnehmung 504 ist in diesem Fall kreisförmig und um die Rotationsachse des Rotationselements RE herum ausgeführt. Ferner befindet sich die Ausnehmung 504 um das Kopplungselement B herum. Ein Abschnitt des Kopplungselements B erstreckt sich somit innerhalb der Ausnehmung 504 des Rotationselements.

Die Ausnehmung 504 kann so dimensioniert sein, dass ein Abschnitt des Spießes in die Ausnehmung des Rotationselements RE eingeführt werden kann. Wie erwähnt, kann das Kopplungselement B so ausgelegt sein, dass das Kopplungselement B in den Spieß eingeführt werden kann. Die Ausnehmung 504 kann hierbei so dimensioniert sein, dass dabei auch ein Abschnitt des Spießes in die Ausnehmung 504 eingeführt werden kann, sodass dieser Abschnitt des Spießes sich innerhalb des Rotationselements RE erstreckt.

Beispielsweise kann der Spieß an dessen Spitze einen Rohrabschnitt aufweisen. Das Kopplungselement B kann hierbei so dimensioniert sein, dass es in den Rohrabschnitt hineinpasst. Die Ausnehmung 504 kann dann so dimensioniert sein, dass der Außendurchmesser des Rohrabschnitts geringer ist als der Durchmesser der Ausnehmung. Somit kann der Rohrabschnitt an der Spitze des Spießes auch bis zu einem gewissen Grad in das Rotationselement eingeführt werden.

Dies kann z.B. eine mechanische Stabilisierung zwischen Rotationselement RE und Spieß ermöglichen. Ferner kann durch die Ausnehmung 504 Spießgut an der Spitze des Spießes zumindest teilweise von dem ersten Flächenabschnitt F1 weggedrückt werden, bei Anbringen des Rotationselements RE an dem Spieß. Dies kann z.B. vor einem Verpackungsvorgang, bei dem ein Zusammendrücken des Spießguts über das Roationselement erfolgt stattfinden. Die Ausnehmung 504 kann einen vorteilhaften Effekt erzielen. So kann es vorkommen, dass Spießgut bis zum oberen Ende der Spitze des Spießes angebracht ist, welches durch die Ausnehmung 504 weggedrückt werden kann. Nach Durchführung eines Verpackungsvorgangs, unter Einsatz des Rotationselements RE, kann es vorkommen, dass es anschließend zu einer Expansion des Spießguts entlang der Spießachse kommt. Wäre in so einem Fall keine Ausnehmung 504 vorhanden, wäre das Spießgut nicht von dem obersten Ende des Spießes weggedrückt. Somit könnte das Risiko steigen, dass nach dem Verpacken das Spießguts (wie hierin beschrieben), dass Spießgut über die Spießachse expandiert. Die Mechanik des Spießes wäre somit ungewünscht beeinträchtigt (z.B. wäre ein Teil des Spießgut nicht mehr sicher am Spieß befestigt). Diesem Risiko über die Ausnehmung entgegenwirkt werden, da ein Distanzpuffer für eine mögliche Nach-Expansion des Spießguts geschaffen wird.

Figur 6 zeigt eine Darstellung einer ersten Einheit gemäß der hierin beschriebenen Offenbarung. Die Darstellung der Figur 6 entspricht einer Explosionsdarstellung der ersten Einheit.

An der ersten Einheit ist hierbei ein Spießgut K angebracht. Die erste Einheit umfasst ein Untergestell 4. Das Untergestell 4 kann z.B. auf der Ablage der zweiten Einheit angebracht werden. Das Untergestell 4 kann z.B. mehrere Stützen umfassen, um das Spießgut K stabil auf der Ablage zu halten.

Die dargestellte erste Einheit umfasst ferner einen Spieß S. Der Spieß S erstreckt sich durch das dargestellte Spießgut K. Das Spieß S kann in einer Fassung des Untergestells 4 angebracht werden. Ebenso ist in Fig. 6 die Spießspitze 5 des Spießes S dargestellt.

Ferner umfasst die erste Einheit einen Unterteller 3. Auf dem Unterteller 3 kann das Spießgut K aufliegen. Zum Beispiel kann der Unterteller als Startauflage dienen, um Spießgut K an dem Spieß 2 anzubringen.

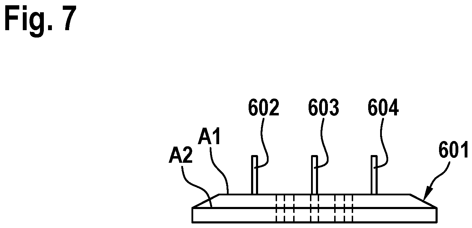

Figur 7 zeigt eine Darstellung eines Teils einer ersten Einheit gemäß der hierin beschriebenen Offenbarung. Insbesondere ist ein Querschnitt eines Beispiels eines Untertellers 601 der ersten Einheit dargestellt. Auf dem Unterteller 601 kann z.B. Spießgut K angebracht werden (wie für Fig. 6 skizziert).

Beispielsweise kann auch der Unterteller 601 eine oder mehrere Mitnahmestrukturen 602, 603, 604 umfassen. Die hierin beschrieben Eigenschaften und Merkmale der Mitnahmestrukturen des Rotationselements können entsprechend auch für die Mitnahmestrukturen des Untertellers 601 gelten. Die Mitnahmestrukturen 602, 603, 604 können z.B. sich entlang der Rotationsachse bzw. der Spießachse des Spießes erstrecken. Bei Anbringen von Spießgut auf dem Unterteller können die Mitnahmestrukturen im Spießgut vorhanden sein. Die Mitnahmestrukturen des Untertellers können eine zusätzliche mechanische Stabilität für die hierin beschriebenen Vorgänge ermöglichen.

Der Unterteller 601 kann einen ersten Untertellerabschnitt A1 aufweisen. Hierbei kann das Spießgut K insbesondere auf dem ersten Untertellerabschnitt A1 angebracht werden. Der erste Untertellerabschnitt A1 kann z.B. eine plane Ebene aufweisen, sodass das Spießgut zuverlässig auf dem Untertelleraschnitt A1 angebracht werden kann. Ferner kann der Unterteller 601 einen zweiten Untertellerabschnitt A2 aufweisen. Der zweite Untertellerabschnitt A2 kann sich von dem ersten Untertellerabschnitt A1 wegerstrecken. Zwischen dem ersten Untertellerabschnitt A1 und dem zweiten Untertellerabschnitt A2 kann somit ein Übergang im Querschnitt erkennbar sein (z.B. eine entsprechende Krümmung eines Konturverlaufs entlang des ersten und zweiten Untertellerabschnitts).

Bei Positionierung der ersten Einheit auf der Ablage der zweiten Einheit kann der zweite Untertellerabschnitt A2 eine kürzere Distanz zu einer Tangentialebene der Ablage aufweisen als der erste Untertellerabschnitt. Beispielsweise kann durch den zweiten Untertellerabschnitt A2 Spielraum geschaffen werden, zwischen dem Spießgut K und dem zweiten Untertellerabschnitt. So kann z.B. auf dem ersten Untertellerabschnitt A1 Spießgut aufliegen, während auf dem zweiten Untertellerabschnitt A2 im Wesentlichen kein Spießgut K vorliegen soll. Somit kann mit dem zweiten Untertellerabschnitt A2 eine Führungsfläche geschaffen werden, an der die Folie beim Verpacken des Spießguts seitlich anliegen und somit geführt werden kann (analog wie hierin für den zweiten Flächenabschnitt F2 beschrieben). Denn mit dem hierin beschriebenen Ansatz kann es zu einer Rotation des Spießguts kommen, wodurch auch der Unterteller 601 in Rotation versetzt wird. Über den zweiten Untertellerabschnitt A2 kann somit auch dem entgegengewirkt werden, dass beim Verpacken Folie an der Unterseite des Untertellers 601 angebracht wird (also an einer Seite des Untertellers 601, die gegenüber der Seite mit dem ersten Untertellerabschnitt A1 ist).

### Bezugszeichenliste

- 100: System
- Z: Spießachse
- S: Spieß
- K: Spießgut
- G: Standgestell
- R: Rotationsachse
- RE: Rotationselement
- F1: Erster Flächenabschnitt
- F2: Zweiter Flächenabschnitt
- 103: Kupplungselement
- 102: Kopf
- 101: Führung
- F: Führungsachse
- M: Kompressionsrichtung
- A: Ablage
- V: Dritte Einheit
- 104: Folie
- 200: System
- 201: Führung
- 202: Kopf
- 203: Führungsantrieb
- 204: Bedieneinheit
- 205: Markierung
- 206: Gehäuse
- 210: Unterteller
- 207: Erste Kupplungseinheit
- 208: Zweite Kupplungseinheit
- 401: Erste Struktur
- 402: Zweite Struktur
- 403: Krümmung
- F3: Kopfseite
- 501: Erste Struktur
- 502: Zweite Struktur
- 503: Dritte Struktur
- 504: Ausnehmung
- 5: Spießspitze
- 4: Untergestell
- 3: Unterteller
- 601: Unterteller
- 602: Erste Struktur
- 603: Zweite Struktur
- 604: Dritte Struktur
- A1: Erster Untertellerabschnitt
- A2: Zweiter Untertellerabschnitt

## Patentansprüche

1. System (100, 200) zum Bearbeiten eines Spießguts umfassend:
eine erste Einheit umfassend:
einen Spieß (S) zum Anbringen des Spießguts (K) an dem Spieß (S);
eine zweite Einheit umfassend:
- Mittel zum Zusammendrücken des Spießguts (K) des Spießes (S), während ein Bearbeiten des Spießguts erfolgt
- eine Übertragungseinheit, welche konfiguriert ist, Spießgut (K) an dem Spieß (S) rotieren zu lassen, insbesondere während des Bearbeitens des Spießguts
- wobei die Übertragungseinheit ein Rotationselement (RE) und einen Rotationsantrieb umfasst; wobei das Rotationselement durch den Rotationsantrieb um eine Rotationsachse (R) rotierbar ist, wobei das Rotationselement mit dem Spießgut und/oder dem Spieß gekoppelt werden kann, sodass eine Rotation des Rotationselements in eine Rotation des Spießguts an dem Spieß übertragen wird, insbesondere während des Bearbeitens des Spießguts.

2. System nach Anspruch 1, wobei das Bearbeiten ein Verpacken des Spießguts umfasst.

3. System nach Anspruch 1 oder 2, wobei:
das Mittel zum Zusammendrücken konfiguriert ist, eine Kraft auf das Rotationselement (RE) im Wesentlichen entlang der Rotationsachse (R) des Rotationselements auszuüben, wobei die Kraft derart gestaltet ist, sodass die Rotation des Rotationselements (RE) in die Rotation des Spießguts an dem Spieß übertragen wird und gleichzeitig ein Zusammendrücken des Spießguts an dem Spieß erfolgt, insbesondere während des Bearbeitens des Spießguts.

4. System nach einem der Ansprüche 1 bis 3, wobei:
in einem Kurvenverlauf einer Kontur entlang einer Seite des Rotationselements (R) zumindest eine Krümmung (403) vorliegt.

5. System nach einem der Ansprüche 1 bis 4, wobei:
wobei eine Seite des Rotationselements (RE) zu einer Ablage gewandt ist, auf der die erste Einheit positioniert werden kann, wobei ein erster Flächenabschnitt (F1) der zur Ablage gewandten Seite des Rotationselements eine kürzere Distanz zu einer Tangentialebene der Ablage aufweist als ein zweiter Flächenabschnitt (F2) der zur Ablage gewandten Seite des Rotationselements.

6. System nach Anspruch 5, wobei:
der erste Flächenabschnitt (F1) näher an der Rotationsachse des Rotationselements ist als der zweite Flächenabschnitt (F2).

7. System nach Anspruch 5 oder 6, wobei:
der zweite Flächenabschnitt (F2) den ersten Flächenabschnitt (F1) zumindest teilweise umgibt, wobei der zweite Flächenabschnitt (F2) eine Schräge und/oder Krümmung hinsichtlich des ersten Flächenabschnitts (F1) darstellt.

8. System nach einem der Ansprüche 4 bis 7, wobei:
der erste Flächenabschnitt (F1) im Wesentlichen eine plane Ebene umfasst, und der zweite Flächenabschnitt (F2) sich in einem Winkel hinsichtlich der planen Ebene wegerstreckt, wobei der Winkel zwischen 5° und 80° liegt, bevorzugt zwischen 5° und 60° liegt, mehr bevorzugt zwischen 5° und 45° liegt, am meisten bevorzugt zwischen 5° und 30° liegt.

9. System nach einem der Ansprüche 1 bis 8, wobei die zweite Einheit eine Ablage (A) umfasst, auf der die erste Einheit positioniert werden kann,
wobei das Mittel zum Zusammendrücken umfasst:
zumindest eine Führung (101, 201) mit einer Führungsachse (F) senkrecht zu der Ablage (A);
einen Kopf (102, 202), der mit der Führung gekoppelt ist und entlang der Führungsachse (F) bewegt werden kann;
wobei das Mittel zum Zusammendrücken konfiguriert ist eine Bewegung des Kopfes in Richtung (M) der Ablage zu verursachen, um eine Kraft auf das Spießgut (K) des Spießes auszuüben, insbesondere während des Bearbeitens des Spießguts.

10. System nach Anspruch 9, wobei:
das Rotationselement (RE) an dem Kopf (101, 201) angebracht ist.

11. System nach einem der Ansprüche 1 bis 10, wobei:
die erste Einheit ein frei positionierbares Spießgestell mit dem Spieß umfasst, wobei durch die Übertragungseinheit der zweiten Einheit eine Rotation des Spießguts bewirkt wird und die erste Einheit als eine passive Stütze für die Rotation des Spießguts fungiert.

12. System nach einem der Ansprüche 1 bis 11, wobei:
das Rotationselement ein Kopplungselement (B) aufweist, welches eine Kopplung zwischen Rotationselement und Spieß (S) ermöglicht.

13. System nach einem der Ansprüche 1 bis 12, wobei:
das Rotationselement eine Struktur (401, 402, 501, 502, 503) aufweist, die in das Spießgut eingeführt werden kann.

14. System nach Anspruch 13, wobei
die Struktur zumindest zwei Komponenten umfasst, die voneinander beabstandet sind, wobei jede Komponente in das Spießgut eingeführt werden kann.

15. System nach einem der Ansprüche 1 bis 14, wobei:
das Rotationselement über eine lösbare Kupplung (207, 208) mit einer Rotationsbewegung des Rotationsantriebs gekoppelt werden kann.
